Europäisches Patentamt

European Patent Office

Office européen des brevets

(19)

(11) Veröffentlichungsnummer: **0 153 564**
**B1**

(12) **EUROPÄISCHE PATENTSCHRIFT**

(45) Veröffentlichungstag der Patentschrift:
**10.01.90**

(51) Int. Cl.⁴: **E 04 B 1/94,** E 06 B 5/16,
F 16 L 5/02

(21) Anmeldenummer: **85100327.7**

(22) Anmeldetag: **16.01.85**

(54) Anordnung zur im Brandfall wirksamen Abdichtung von Öffnungen in Bauteilen.

(30) Priorität: **07.02.84 DE 3404221**

(43) Veröffentlichungstag der Anmeldung:
**04.09.85 Patentblatt 85/36**

(45) Bekanntmachung des Hinweises auf die Patenterteilung:
**10.01.90 Patentblatt 90/2**

(84) Benannte Vertragsstaaten:
**AT BE CH DE FR GB IT LI LU NL SE**

(56) Entgegenhaltungen:
EP-A- 0 051 106
EP-A- 0 090 635
AT-B- 354 582
BE-A- 630 422
CH-A- 464 703
DE-A- 2 450 286
FR-A- 2 252 736
FR-A- 2 405 338
LU-A- 66 056
NL-A- 8 302 140
US-A- 3 566 541

(73) Patentinhaber: **Chemie Linz Gesellschaft m.b.H.,**
**St.Peter-Strasse 25, A-4021 Linz (AT)**

(72) Erfinder: **Bihlmayer, Gustav, Dr., Bürgerweg 1,**
**A-4400 St. Ulrich (AT)**
Erfinder: **Zöchbauer, Heinz, Denkstrasse 25, A-4020 Linz**
**(AT)**

(74) Vertreter: **Kunz, Ekkehard, Dr., Chemie Holding AG**
**Patentwesen St. Peter-Strasse 25, A-4021 Linz (AT)**

**Beschreibung**

Die vorliegende Erfindung betrifft eine Anordnung zur im Brandfall wirksamen Abdichtung von Öffnungen in Bauteilen wie Fugen, Hohl- bzw. Zwischenräume, die aus thermisch expandierbaren bzw. aufschäumbaren Massen besteht, die vor allem für die Abdichtung von Maueröffnungen und Türfugen gedacht ist.

Thermisch expandierbare Dichtungsmaterialien, die an Wänden oder in Fugen, Hohl- bzw. Zwischenräumen oder Durchgängen von Bauteilen zum vorbeugenden Brandschutz angebracht werden, sind schon seit längerer Zeit bekannt. Diese Brandschutzmaterialien bestehen meistens aus feuerhemmenden, thermisch expandierbaren bzw. intumeszierenden Zusammensetzungen, die entweder direkt auf das zu schützende Objekt aufgetragen oder auf ein feuerfestes Trägermaterial aufgebracht und dann in den Fugen oder Hohlräumen von Bauteilen, die im Brandfall abgedichtet werden sollen, angebracht werden. Diese thermisch expandierenden Massen enthalten als wesentlichen Bestandteil meistens ein oder mehrere unter Hitzeeinwirkung expandierende Bläh- oder Schwellmittel, die eine isolierende Sperrschicht gegen Feuer und Rauch bilden, sowie Flammschutzmittel, Füllmittel und Bindemittel, die das meist pulverförmige Blähmittel zusammenhalten und die Eigenschaft haben, im Brandfalle nicht rasch abzubrennen, sondern langsam zu verkohlen und so eine zusätzliche Dämmschicht bilden.

In der AT-PS-360 130 ist beispielsweise ein thermisch expandierbares Dichtungsmaterial für Fugen oder Hohlräume und ein Verfahren zum Abdichten von Wänden oder Türen durch Anbringen dieses Dichtungsmaterials beschrieben. Die thermisch expandierbare Zusammensetzung, die bei diesem Dichtungsmaterial auf ein Vlies oder Gewebe aus Glas oder Kunststoff aufgetragen wird, enthält neben Blähgraphit ein Alkylphenol-Formaldehydharz und Polychlorbutadien als Bindemittel und gegebenenfalls noch eine anorganische Faser und Aluminiumhydroxid. Durch die Kombination von Blähgraphit mit elastomeren und duromeren Bindemitteln, wie beispielsweise Chloroprenkautschuke und Phenolharze, werden thermisch expandierbare Zusammensetzungen erhalten, die eine hohe mechanische Festigkeit aufweisen und nach ihrer Anbringung auf dem entsprechenden Substrat bei der Einwirkung von Hitze und Flammen eine verhältnismäßig geringe Fließfähigkeit zeigen und daher auch in einem nicht gänzlich abgeschlossenen Raum einen Blähdruck entwickeln. Der Blähdruck wiederum bewirkt, daß die im Brandfall expandierende Masse Hindernissen nicht ausweicht und durch den Druck, die sie auf das entgegenstehende Hindernis ausübt, mit geringem Materialaufwand in Fugen und Hohlräumen eine fest abdichtende Sperrschicht bildet.

Brandschutzmaterialien mit gleichfalls geringer Fließfähigkeit und hohem Blähdruck, die aus hydratisierten Alkalisilikaten mit anorganischen Fasern als Füllmittelzusatz aufgebaut sind, werden in der DE-AS-1 176 546 und 1 169 832 beschrieben. Diese Materialien spalten unter Hitzeeinwirkung Wasserdampf ab, wodurch ein aufgeschäumter, jedoch spröder Belag als Hitzeisolator gebildet wird.

Die begrenzte Fließfähigkeit dieser Materialien hat aber den Nachteil, daß schon vorhandene oder im Brandfall entstehende größere Hohlräume nicht gänzlich ausgefüllt werden, wie es für eine möglichst gute Abschirmung des zu schützenden Bereichs von Feuer und Hitze wünschenswert wäre.

Es sind auch schon Brandschutzmaterialien bekannt, bei denen das Bläh- oder Schwellmittel mit Bindemittel kombiniert oder in Füllmaterialien eingelagert wird, die vorwiegend thermoplastische Eigenschaften aufweisen. In der EP-A-51 106 sind beispielsweise gegebenenfalls geschäumte Intumeszenzmassen beschrieben, die durch Umsetzung von Polyisocyanaten mit einer Mischung von Hydroxylgruppen aufweisenden phosphorhältigen Kondensationsprodukten, Hydroxylgruppen aufweisenden Polyestern und Cyanursäure oder Cyanursäurederivaten erhalten werden. Auf diese Weise entstehen weiche, flexible Intumeszenzmassen, die schwer entflammbar sind, und bei Hitzeeinwirkung bis zum Zehnfachen ihres ursprünglichen Volumens aufschäumen. Die gute Fließfähigkeit dieser Brandschutzmaterialien bringt jedoch den Nachteil mit sich, daß aufgrund des relativ geringen oder praktisch fehlenden Blähdruckes die Bildung einer fest abdichtenden Sperrschicht nur sehr schwer und mit großem Materialverbrauch möglich ist.

In der LU-A-066 056 wird eine unter Hitzeeinwirkung aufschäumbare Brandschutzmasse beschrieben, die aus einer Mischung von mindestens zwei Komponenten besteht, die bei verschieden hohen Temperaturen aufschäumen. Dadurch wird ein gleichmäßiges Aufschäumen über einen breiten Temperaturbereich erzielt.

Bei den bis jetzt bekannten Brandschutzverfahren ergaben sich demnach die Nachteile, daß je nach verwendeter Brandschutzmasse entweder gute Abdichtung der Hohlräume, oder gute Isolierung erreicht wurde.

Im Gegensatz dazu ist es Aufgabe der vorliegenden Erfindung, eine Anordnung zu schaffen, bei der sowohl eine Sperrschicht als auch eine gute Isolierung erzielt wird, indem ein aus mehreren Komponenten bestehendes Brandschutzsystem angewendet wird. Dabei wird ein besonders effektiver Brandschutz dadurch erreicht, daß die Hohlräume durch ein im Brandfall bereits bei niederer Temperatur aufschäumbares Dichtungsmaterial mit hohem Blähdruck abgedichtet werden und sodann durch ein zweites, bei höherer Temperatur aufschäumbares Dichtungsmaterial mit geringerem Blähdruck vollständig ausgefüllt werden, wodurch eine Isolierschicht gegen Feuer und Hitze gebildet und dadurch die weitere Ausbreitung des Brandes unterbunden wird.

Gegenstand der vorliegenden Erfindung ist demnach eine Anordnung zur im Brandfall wirksamen Abdichtung von Öffnungen in Bauteilen wie Fugen, Hohl- bzw. Zwischenräume oder dergleichen, bestehend aus im Brandfall um ein Mehrfaches ihres Volumens expandier- oder aufschäumbaren Massen mit unterschiedlichen Blähtemperaturen, dadurch gekennzeichnet, daß in der zu schützenden Öffnung sowohl eine thermisch expandierbare Masse mit einer Blähtemperatur von mindestens 100 °C, einem Blähdruck von über 2 bar und einer geringen Fließfähigkeit (Komponente A), als auch eine im Brandfall aufschäumbare Masse mit einer Blähtemperatur von mindestens 150 °C, mit der Maßgabe, daß diese in jedem Fall höher ist als jene der Komponente A, und einem Blähdruck von weniger als 2 bar (Komponente B) räumlich übereinander oder nebeneinander vorliegen.

Der Blähdruck im Sinne der Erfindung ist dabei als jener Druck definiert, der bei 300 °C zwischen zwei Metallplatten im Abstand von 2,5 mm gemessen wird, wobei das Material seitlich nicht abgegrenzt ist und sich in zwei Dimensionen ungehindert ausbreiten kann. Die Fließfähigkeit ist als jener Weg in mm definiert, den 0,25 cm³ Material in einem Glasrohr von 14 mm Durchmesser waagrecht fließend zurücklegen, wenn sie 15 min auf 300 °C erwärmt werden. Die Blähtemperatur ist definitionsgemäß jene Temperatur, bei der im Schmelzpunktsmikroskop der Beginn einer Expansion des Materials beobachtet werden kann.

Besonders vorteilhaft hat es sich dabei erwiesen, wenn die Komponente B bei deutlich höheren Temperaturen, vorzugsweise um mehr als 50 °C höher als die Komponente A aufzuschäumen beginnt. Dadurch erfolgt die Abdichtung der Hohlräume durch die aufschäumende Komponente A bereits zu Beginn eines Brandes bei Temperaturen, bei denen die Komponente B noch nicht aufschäumt, wodurch ein vorzeitiges Ausfließen der meist leicht fließenden Komponente B aus dem Hohlraum verhindert wird. Es hat sich auch als vorteilhaft erwiesen, wenn sich die Blähdrucke der beiden Komponenten deutlich unterscheiden, sodaß der Blähdruck der Komponente B maximal 50 %, bevorzugt maximal 10 % des Blähdruckes der Komponente A beträgt, wodurch die Funktionen des Abdichtens durch Komponente A und des Ausfüllens und Isolierens des Hohlraumes durch Komponente B auch bei kompliziert ausgebildeten Fugen und Öffnungen optimal erfüllt werden. Bei kompliziert und verwinkelt ausgebildeten Fugen und Öffnungen ist eine gute Fließfähigkeit von Komponente B vorteilhaft, um beim Aufschäumen ein Ausfüllen aller Hohlräume zu gewährleisten. Um Hohlräume mit mehreren Öffnungen abzudichten, werden die Komponenten A und B vorzugsweise in mehr als zwei Schichten aufgebracht. So kann beispielsweise ein beidseitig offener Hohlraum durch Aufbringen der Komponente B im Inneren und durch Aufbringen jeweils einer Schicht der Komponente A zu den beiden Öffnungen hin brandschützend abgedichtet werden.

Die Abdichtung von Fugen und Hohlräumen kann besonders einfach durch die Verwendung von vorgefertigten Dichtelementen, die durch Kombination von die Komponenten A und B enthaltenden Streifen oder Bahnen erhalten werden, erfolgen. Dabei können die beiden Bahnen beispielsweise durch Laminieren zu einem Verbundstreifen kombiniert werden. Eine andere Möglichkeit zur Herstellung eines vorgefertigten Dichtelementes besteht beispielsweise darin, daß die Komponente A in einer Ausnehmung des aus Komponente B bestehenden Streifens angebracht ist.

Die beiden Komponenten des erfindungsgemäßen Brandschutzsystems können demnach je nach Bedarf als streichfähige Masse oder als Laminat aufgebracht werden. Um z.B. bei Mauerdurchbrüchen oder in Hohlräumen bei Trennwänden effektiven Brandschutz zu erreichen, wird in den Hohlraum innen zunächst die leicht fließende Komponente B eingetragen und nach außen mit der Komponente A zweckmäßig nach beiden Seiten abgeschlossen. Werden z.B. Rohre und Kabel in Mauerdurchbrüchen verlegt, kann der Abschluß des Hohlraums nach außen vorzugsweise auch dadurch erfolgen, daß zunächst die Komponente B in den Hohlraum zwischen Rohr und Mauer eingebracht und anschließend ein mit der Komponente A beschichtetes Vlies aus Glasfasern bzw. Kunstfasern um das Rohr bzw. um das Kabel gewickelt wird. Im Brandfall beginnt die Komponente A bei relativ niedriger Temperatur zu expandieren und dichtet dank ihres hohen Blähdruckes den Hohlraum bzw. die Fuge nach außen hin vollständig ab. Im weiteren Verlauf des Brandes beginnt bei höherer Temperatur die Komponente B zu expandieren und füllt den gesamten Hohlraum vollständig aus, wodurch eine Isolierschicht gebildet wird, welche die weitere Ausbreitung des Brandes verhindert.

Zum Abdichten von Fugen, wie beispielsweise bei Türen oder bei Trennwänden wird die Komponente A vorzugsweise derart angebracht, daß sie zumindest teilweise von der Komponente B eingeschlossen ist, wobei die Randpartien von Komponente B nicht bedeckt sind. Dadurch wird im Brandfall bei der zuerst auftretenden niedrigen Temperatur die Fuge durch die aufschäumende Komponente A abgedichtet. Im weiteren Brandverlauf wird die Komponente A von der Komponente B umschäumt und isoliert, wodurch die Funktion des Brandschutzsystems über einen längeren Zeitraum erhalten wird. Besonders vorteilhaft werden dabei vorgefertigte Dichtelemente verwendet, bei denen die Komponente A über der Komponente B, bzw. in einer Ausnehmung der Komponente B aufgetragen ist.

Die Komponente A der erfindungsgemäßen Anordnung besteht aus Massen mit hohem Blähdruck, geringer Fließfähigkeit und relativ niedrigen Blähtemperaturen wie z.B. Blähgraphit in Kombination mit elastomeren und duromeren Kunstharzen, gegebenenfalls verstärkt mit Füllstoffen, wobei der elastomere Anteil den Zusammenhalt der Mischung bewirkt und der duromere Anteil im Brandfall ein mechanisch stabiles Kohlenstoffgerüst bildet. Als Elastomere kommen bevorzugt chlorierte Polybutadiene, als duromere Harze Phenol-Formaldehydkondensate, als weitere Zusatzstoffe anorganische Fasern und Aluminiumhydroxid zum Einsatz. Als Komponente A können außerdem wasserhältige, gegebenenfalls mit anorganischen Fasern gefüllte Alkalisilikate verwendet werden, wie sie in der DE-PS-1 659 608 und in der DE-AS-1 169 832 beschrieben sind (Palusol (R), Fa. BASF) und die ab etwa 100 °C zu expandieren beginnen.

Gegenüber den Massen auf Blähgraphitbasis haben die Massen auf Silikatbasis den Nachteil, daß sie hygroskopisch sind und leicht $CO_2$ aufnehmen, wodurch ihre Blähfähigkeit durch feuchte Luft beeinträchtigt wird. Eine als Komponente A besonders bevorzugte Zusammensetzung ist in der AT-PS-360 130 beschrieben und enthält beispielsweise auf 100 Gew.-Teile Blähgraphit 10 bis 30 Gew.-Teile Polychlorbutadien, 1 bis 40 Gew.-Teile eines Alkylphenol-Formaldehydharzes und 1 bis 3 Gew.-Teile Stabilisatoren sowie gegebenenfalls bis zu 30 Gew.-Teile Asbestfasern und bis zu 80 Gew.-Teile Aluminiumhydroxid. Die Blähtemperatur des Blähgraphits liegt bei etwa 150 °C.

Als Komponente B kommen plastische Materialien in Frage, die im Brandfall erst bei Temperaturen über 150 °C aufschäumen und dabei eine stabile Isolierschicht bilden ohne zu verbrennen. Solche Materialien sind beispielsweise flammfest eingestellte, gegebenenfalls geschäumte Intumeszenzmassen auf Basis von Polyurethanen (wie z.B. Fomox P (R) der Fa. Bayer), die als Rezepturbestandteile neben Polyisocyanaten bevorzugt eine Kombination aus Polyesterpolyolen, Cyanursäurederivaten und phosphorhaltigen Polyhydroxylverbindungen enthalten. Eine besonders bevorzugte Zusammensetzung ist in der EPA-51 106 beschrieben und wird erhalten durch Umsetzung von 10–35 Gew.-Teilen eines Polyisocyanates mit 100 Gew.-Teilen eines Gemisches bestehend aus 5 bis 50 Gew.-% einer phosphorhältigen Polyhydroxylverbindung, 30 bis 70 Gew.-% Polyesterpolyolen, 7 bis 40 Gew.-% Cyanursäurederivaten und 0 bis 10 Gew.-% Wasser bzw. 0 bis 25 Gew.% organischen Verbindungen mit gegenüber Isocyanaten reaktionsfähigen Wasserstoffatomen.

Weitere Beispiele für Mischungen, die als Komponente B dienen können, sind Massen auf Basis von Polyvinylazetatdispersionen, wie z.B. Beckonit (R) der Fa. Reichhold Chemie, bzw. Mowilith (R) der Fa. Höchst, welches mit chlorierten Alkylphosphaten flammfest eingestellt ist, gegebenenfalls unter Zusatz von stickstoffhaltigen Blähmitteln wie z.B. Melamin oder Dicyandiamid.

Ebenfalls verwendet werden können Mischungen aus wäßrigen Alkalisilikaten, wie sie beispielsweise in der DE-ÖS-2 450 286 beschrieben werden und wie sie z.B. als Fomox XSD (R) von Fa. Bayer im Handel sind, deren Fließfähigkeit durch Zusatz einer Latexdispersion, vorzugsweise eines Copolymeren aus Styrol, Butadien und Acrylsäure bzw. Methacrylsäure erhöht wird.

Die folgenden Zeichnungen zeigen beispielhaft Anwendungsmöglichkeiten für die erfindungsgemäße Anordnung:

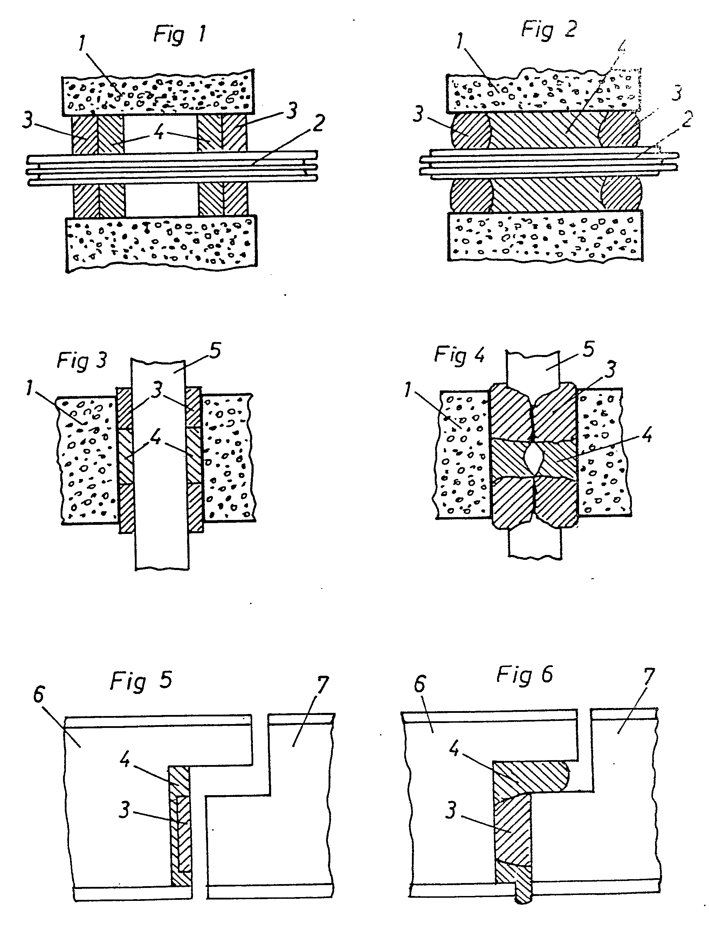

Figur 1 zeigt die brandschützende Abdichtung eines Durchganges durch ein Mauerwerk 1, durch das ein Kabel 2 verlegt wird. Der verbleibende Hohlraum ist zu den Öffnungen hin innen mit der Komponente B 4 und nach außen hin mit der Komponente A 3 teilweise ausgefüllt.

Die Situation nach dem Brand ist in Figur 2 dargestellt, wobei die aufgeblähte Komponente A 3 die beiden Öffnungen nach außen abdichtet, und die aufgeschäumte Komponente B 4 den Durchbruch vollständig ausfüllt.

In Figur 3 ist die brandschützende Abdichtung eines Durchbruchs durch die Mauer 1, durch den ein Thermoplastrohr 5 geführt ist, abgebildet. Der Hohlraum zwischen Rohr und Mauer ist innen mit der Komponente B 4 und nach den beiden Außenseiten hin mit der Komponente A 3 ausgefüllt. Figur 4 zeigt den abgedichteten Durchbruch nach dem Brand, wobei die expandierten Komponenten A 3 und B 4 das in der Hitze erweichte Thermoplastrohr zusammendrücken und dadurch den Durchbruch fest abschließen.

Figur 5 zeigt die brandschützende Abdichtung einer Türfuge, wobei die Komponente B 4 in einer Nut des Türblattes 6 angebracht ist. Die Komponente A 3 ist in eine in der Komponente B 4 befindlichen Nut derart eingebracht, daß sie die Randpartien der Komponente B 4 nicht bedeckt. In Figur 6 wird die Abdichtung der zwischen Türblatt 6 und Türzarge 7 liegenden Fuge nach dem Brand durch die expandierten Komponenten A 3 und B 4 ersichtlich, wobei B 4 eine teilweise Isolierschicht um A 3 bildet.

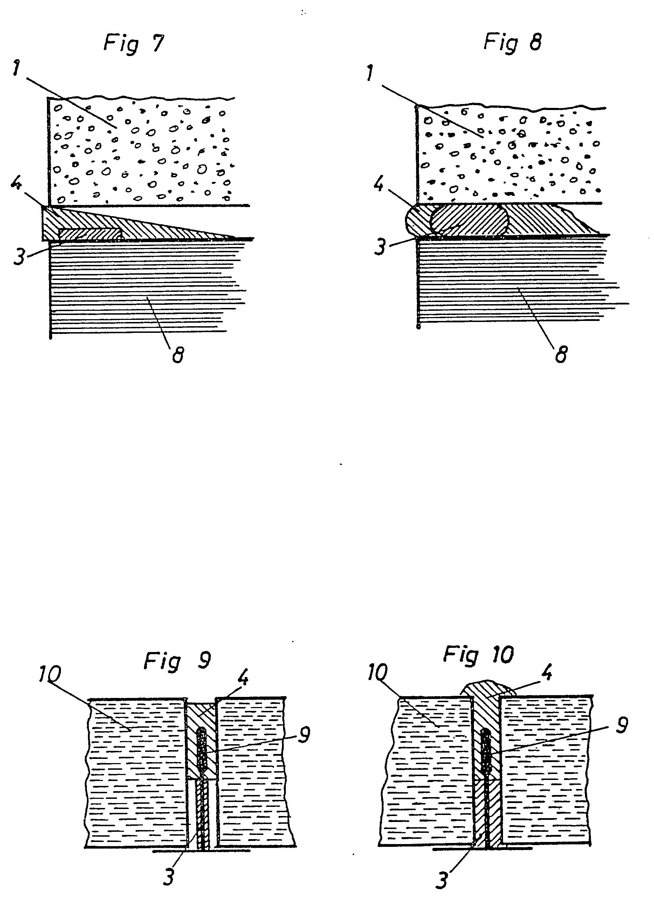

Figur 7 zeigt die brandschützende Abdichtung des Hohlraumes zwischen einem Mauerwerk 1 und einer Trennwand 8 durch einen aus der Komponente B 4 bestehenden Dichtungskeil, in dem in einer Ausnehmung die Komponente A 3 angebracht ist. Figur 8 zeigt die Abdichtung des Hohlraumes nach dem Brand durch die aufgeschäumten Komponenten A 3 und B 4.

In Figur 9 ist die brandschützende Abdichtung einer Fuge zwischen zwei Deckenelementen 10, in der sich das zur Aufhängung der Deckenelemente 10 vorgesehene Stahlblechprofil 9 befindet, abgebildet. Im unteren Teil des verbleibenden Hohlraumes ist die Komponente A 3 auf dem Stahlblechprofil 9 angebracht, der obere Teil ist mit der Komponente B 4 ausgefüllt. Figur 10 zeigt die Abdichtung der Fuge zwischen den Deckenelementen 10 durch die aufgeschäumten Komponenten A 3 und B 4 nach dem Brand.

Die folgenden Beispiele dienen dazu, die erfindungsgemäße Anordnung näher zu erklären:

Beispiel 1
Kabeldurchgang durch ein Mauerwerk (Fig. 1)

Als Komponente A wurde die folgende in der AT-PS-354 582 beschriebene Brandschutzmasse verwendet:

100 Gew.-Teile Blähgraphit
24 Gew.-Teile Polychlorbutadien
2 Gew.-Teile tert.Butylphenol-Formaldehydharz
10 Gew.-Teile Asbestfasern
48 Gew.-Teile Aluminiumhydroxid

2 Gew.-Teile Stabilisator (sterisch gehindertes Phenol, Magnesiumoxid)
165 Gew.-Teile Toluol als Lösungsmittel.

Die Blähtemperatur dieser Masse lag bei 150 °C, der Blähdruck bei 15 bar, die Fließfähigkeit bei 2 mm.

Als Komponente B kam Beckonit (R) eine Brandschutzmasse der Fa. Reichhold Chemie auf Basis einer Polyvinylazetatdispersion zum Einsatz. Die Blähtemperatur dieser Masse lag bei 250 °C, der Blähdruck bei 0 bar, die Fließfähigkeit bei 0 mm.

Durch ein 45 cm dickes Mauerwerk wurde wie in Figur 1 dargestellt, ein Kabel von 7 cm Durchmesser geführt. Der für die Kabeldurchführung geschaffene Hohlraum wurde im inneren Drittel frei gelassen. Nach außen hin wurde zunächst eine ca. 7 cm dicke Schicht der Komponente B 4 und dann eine ca. 7 cm dicke Schicht der Komponente A 3 eingetragen.

Beim Brandversuch begann ab 150 °C die Komponente A 3 zu expandieren und dichtete den Hohlraum nach außen hin ab. Ab 250 °C begann die Komponente B 4 zu expandieren und füllte auch den im Inneren freigelassenen Hohlraum aus, wobei die Expansion nach außen von der durch ihren Blähdruck eine Sperrschicht bildenden Komponente A 3 verhindert wurde (Figur 2).

Beispiel 2
Rohrabschottung (Fig. 3)

Als Komponente A wurde die im Beispiel 1 beschriebene Brandschutzmasse auf Blähgraphitbasis verwendet, die hier in einer Menge von 2 kg/m² auf ein Glasfaservlies aufgebracht war. Als Komponente B wurde Fomox XSD (R), eine Brandschutzmasse der Fa. Bayer auf Basis Wasserglas/Latex verwendet. Die Blähtemperatur lag bei 250 °C, der Blähdruck bei 0 bar, die Fließfähigkeit bei 10 mm.

Wie in Figur 3 dargestellt, wurde ein 12 cm dickes Thermoplastrohr durch ein Mauerwerk geführt. Der zwischen Rohr und Mauer befindliche Hohlraum im Abstand von 4 cm wurde im inneren Drittel mit der Komponente B 4 gefüllt. Die äußeren Drittel waren mit der auf einem Glasfaservlies aufgebrachten Komponente A 3 ausgefüllt, welche in vorgewärmtem Zustand um das Rohr gewickelt und eingeschoben wurde. Beim Brandversuch begann die Komponente A 3 ab 150 °C zu expandieren, drückte das durch die Wärme weichgewordene Thermoplastrohr ein und sperrte den Hohlraum einseitig ab. Der im Inneren verbleibende Hohlraum wurde durch die aufgeschäumte Komponente B 4 ausgefüllt, welche für einige Zeit den Wärmeübergang verzögerte. Nachdem auch die zweite Schicht der Komponente A 3 die Blähtemperatur von 150 °C erreicht hatte, begann auch diese zu expandieren und den Übergang endgültig abzuschließen (Figur 4).

Beispiel 3
Fugenabdichtung bei Türen (Fig. 5)

Die Komponente A bestand aus dem in Beispiel 2 beschriebenen, mit einer Masse auf Blähgraphitbasis beschichteten Glasfaservlies. Als Komponente B wurde Fomox P (R) der Fa Bayer, eine Brandschutzmasse auf Basis eines Polyurethanschaumes, mit einer Blähtemperatur von 230 °C, einem Blähdruck von 0 bar und einer Fließfähigkeit von 7 mm verwendet.

In einem Türblatt wurde, wie in Figur 5 dargestellt, im Bereich der Fuge eine ca. 5 mm tiefe und 30 mm breite Nut gefräst. In diese Nut wurde ein U-Profil der elastischen Komponente B 4 geklebt, welche ihrerseits wieder eine Nut von ca. 2,5 × 18 mm aufwies. In diese zweite Nut wurde die Komponente A 3 eingeklebt. Beim Brandversuch begann die Komponente A 3 ab 150 °C zu expandieren und führte durch ihren Druck zu einem dichten Abschluß der Fuge. Ab 230 °C begann die Komponente B 4 zu expandieren, wobei die restlichen vorhandenen oder im Verlauf des Brandes durch Verzug entstandenen Hohlräume unter Ausbildung einer thermischen Isolierung gefüllt wurden (Figur 6).

Beispiel 4
Dichtungskeil zwischen Trennwänden und Mauerwerk

Wie in Figur 7 dargestellt, befand sich zwischen einem Mauerwerk und einer Trennwand eine bis zu 10 mm dicke Fuge. In diese Fuge wurde ein keilförmiges Profil der im Beispiel 3 verwendeten Komponente B 4 auf Basis eines Polyurethanschaumes eingedrückt. Die Keilform ist aufgrund der ungleichmäßigen Dicke und Tiefe der Fuge von Vorteil. Im Keil befand sich eine ca. 3 mm tiefe Nut, welche mit der in Beispiel 1 beschriebenen Komponente A 3 auf Basis Blähgraphit gefüllt war. Beim Brandversuch expandierte die Komponente A 3 ab 150 °C und dichtete die Fuge streifenförmig ab. Die restlichen Hohlräume wurden im weiteren Brandverlauf von der expandierenden Komponente B 4 ausgefüllt, welche zusätzlich eine thermische Isolierung in der Fuge bewirkte (Figur 8).

Beispiel 5
Aufhängungsabschottung bei Deckenkonstruktionen

Wie in Figur 9 dargestellt, wurde der Raum zwischen zwei Elementen einer abgehängten Decke, in dem sich die Teile der Aufhängung befanden, wie folgt ausgefüllt: Das Stahlblechprofil wurde im gesamten Bereich des verjüngten Teiles der Aufhängung beidseitig, mit der im Beispiel 2 verwendeten Komponente A 3 abgedeckt. Der restliche Zwischenraum wurde mit der in Beispiel 3 verwendeten Komponente B 4 gefüllt, die in U-Profilform ausgebildet ist und aufgrund ihrer Elastizität zusammengedrückt werden kann. Beim Brandversuch begann die Komponente A 3 bei 150 °C zu expandieren und verschloß ohne abzutropfen oder abzufließen den Zwischenraum nach unten (Figur 10). Nachdem die Temperatur im Zwischenraum ca. 230 °C erreicht hatte, begann die Komponente B 4 zu expandieren, füllte die restlichen Hohlräume und isolierte gleichzeitig wesentliche Teile der Aufhängung und verhinderte während einer gewissen Zeit ein Ansteigen der Temperatur auf der feuerabgekehrten Seite der Konstruktion über die in den Normen zulässigen Werte.

## Patentansprüche

1. Anordnung zur im Brandfall wirksamen Abdichtung von Öffnungen in Bauteilen wie Fugen, Hohl- bzw. Zwischenräume oder dergleichen, bestehend aus im Brandfall um ein Mehrfaches ihres Volumens expandier- oder aufschäumbaren Massen mit unterschiedlichen Blähtemperaturen, dadurch gekennzeichnet, daß in der zu schützenden Öffnung sowohl eine thermisch expandierbare Masse (3) mit einer Blähtemperatur von mindestens 100 °C, einem Blähdruck von über 2 bar und einer geringen Fließfähigkeit (Komponente A) als auch eine im Brandfall aufschäumbare Masse (4) mit einer Blähtemperatur von mindestens 150 °C, mit der Maßgabe, daß diese in jedem Fall höher ist als jene der Komponente A, und einem Blähdruck von weniger als 2 bar (Komponente B) räumlich übereinander oder nebeneinander vorliegen.

2. Anordnung nach Anspruch 1, dadurch gekennzeichnet, daß die Blähtemperatur der Komponente B um mindestens 50 °C über jener der Komponente A liegt.

3. Anordnung nach den Ansprüchen 1 und 2, dadurch gekennzeichnet, daß der Blähdruck der Komponente B maximal 10% des Blähdrucks der Komponente A beträgt.

4. Anordnung nach den Ansprüchen 1 bis 3, dadurch gekennzeichnet, daß die Komponente B eine gute Fließfähigkeit besitzt.

5. Anordnung nach den Ansprüchen 1 bis 4, insbesondere zum Abdichten von Mauerdurchbrüchen im Brandfall, dadurch gekennzeichnet, daß eine Schicht der Komponente B nach außen durch je eine Schicht der Komponente A überdeckt ist.

6. Anordnung nach den Ansprüchen 1 bis 5, insbesondere zum Abdichten von Fugen, insbesondere solchen neben Feuerschutztüren dadurch gekennzeichnet, daß auf einer, die Türfuge begrenzenden Seite die Komponente A über die Komponente B aufgetragen ist, wobei beide Komponenten gemeinsam nur einen Teil der lichten Weite der Türfuge ausfüllen und die Komponente A vorzugsweise die Randpartien der Komponente B nicht bedeckt.

7. Anordnung nach den Ansprüchen 1 bis 6, dadurch gekennzeichnet, daß als Komponente A eine Masse, bestehend aus Blähgraphit, einem halogenierten Elastomeren, einem Phenolharz, Stabilisatoren sowie gegebenenfalls Aluminiumhydroxid und Mineralfasern, vorliegt.

8. Anordnung nach den Ansprüchen 1 bis 7, dadurch gekennzeichnet, daß als Komponente B ein Polyurethanschaum vorliegt, der durch Reaktion eines Isocyanates mit einer Mischung aus phosphorhaltigen Polyolen, Polyesterpolyolen und Cyanursäurederivaten erhalten wird.

9. Anordnung nach den Ansprüchen 1 bis 7, dadurch gekennzeichnet, daß als Komponente B eine Masse, bestehend aus einer Polyvinylazetatdispersion, chlorierten Alkylphosphaten und Melamin bzw. Dicyandiamid, vorliegt.

10. Anordnung nach den Ansprüchen 1 bis 7, dadurch gekennzeichnet, daß als Komponente B eine Masse aus wäßrigen Alkalisilikaten und einem Latex vorliegt.

## Claims

1. Arrangement for sealing, to be effective in the event of fire, openings in building components, such as gaps, cavities and interspaces or the like, consisting of masses, which in the event of fire, are expandable or foamable by a multiple of their volume at different expansion temperatures, characterized in that, in the opening which is to be protected, there are both a thermally expandable mass (3) having an expansion temperature of at least 100 °C, an expansion pressure of more than 2 bar and a low flowability (component A), and a mass (4) foamable in the event of fire and having an expansion temperature of at least 150 °C, with the proviso that this is in every case higher than that of component A, and an expansion pressure of less than 2 bar (component B), spatially one above the other or side by side.

2. Arrangement according to Claim 1, characterized in that the expansion temperature of component B is at least 50 °C above that of component A.

3. Arrangement according to Claims 1 and 2, characterized in that the expansion pressure of component B is at most 10% of the expansion pressure of component A.

4. Arrangement according to Claims 1 to 3, characterized in that component B has good flowability.

5. Arrangement according to Claims 1 to 4, in particular for sealing breaches in walls in the event of fire, characterized in that a layer of component B is covered externally by a layer of component A in each case.

6. Arrangement according to Claims 1 to 5, in particular for sealing gaps, especially those next to fire-resistant doors, characterized in that, on the side bordering the door gap, component A is applied over component B, both components together filling only a part of the clear width of the door gap and component A preferably not covering the edge parts of component B:

7. Arrangement according to Claims 1 to 6, characterized in that component A is a mass consisting of expandable graphite, a halogenated elastomer, a phenolic resin, stabilizers and, if desired, aluminium hydroxide and mineral fibres.

8. Arrangement according to Claims 1 to 7, characterized in that component B is a polyurethane foam which is obtained by reacting an isocyanate with a mixture of phosphorus-containing polyols, polyester-polyols and cyanuric acid derivatives.

9. Arrangement according to Claims 1 to 7, characterized in that component B is a mass consisting of a polyvinyl acetate dispersion, chlorinated alkyl phosphates and melamine or dicyandiamide.

10. Arrangement according to Claims 1 to 7, characterized in that component B is a mass consisting of aqueous alkali metal silicates and a latex.

## Revendications

1. Dispositif pour le calfeutrage efficace en cas d'incendie, d'ouvertures d'éléments de construction telles que des joints, des cavités et des interstices ou similaires, constitué par des masses expansibles ou moussables à un multiple de leur volume en cas d'incendie et ayant des températures de gonflement ou foisonnement différentes, caractérisé en ce que dans l'ouverture à protéger sont à la fois présentes, spatialement superposées ou côte à côte, une masse (3) thermiquement expansible, ayant une température de gonflement d'au moins 100 °C, une pression de gonflement supérieure à 2 bars et une faible capacité de fluage (composant A), et une masse (4) moussable en cas d'incendie et ayant une température de gonflement d'au moins 150 °C, à condition que celle-ci soit en tous cas plus élevée que celle du composant A, ainsi qu'une pression de gonflement inférieure à 2 bars (composant B).

2. Dispositif selon la revendication 1, caractérisé en ce que la température de gonflement du composant B se situe à au moins 50 °C au-dessus de celle du composant A.

3. Dispositif selon les revendications 1 et 2, caractérisé en ce que la pression de gonflement du composant B s'élève au maximum à 10% de la pression de gonflement du composant A.

4. Dispositif selon les revendications 1 à 3, caractérisé en ce que le composant B possède une bonne capacité de fluage.

5. Dispositif selon les revendications 1 à 4, en particulier pour le calfeutrage de brèches de murs en cas d'incendie, caractérisé en ce qu'une couche de composant B est chaque fois recouverte vers l'extérieur par une couche de composant A.

6. Dispositif selon les revendications 1 à 5, en particulier pour le calfeutrage de joints, tout particulièrement ceux qui sont adjacents aux portes coupe-feu, caractérisé en ce que sur un côté, délimitant le joint de porte, le composant A est appliqué sur le composant B, les deux composants ne remplissant conjointement qu'une partie de la largeur intérieure du joint de porte et, de préférence, le composant A ne recouvrant pas les parties de bordure du composant B.

7. Dispositif selon les revendications 1 à 6, caractérisé en ce que comme composant A est utilisée une masse constituée par du graphite foisonnant, un élastomère halogéné, une résine phénolique, des stabilisants ainsi qu'éventuellement de l'hydroxyde d'aluminium et des fibres minérales.

8. Dispositif selon les revendications 1 à 7, caractérisé en ce que comme composant B est utilisée une mousse de polyuréthanne qui est obtenue par réaction d'un isocyanate avec un mélange de polyols contenant du phosphore, de polyesterpolyols et de dérivés d'acide cyanurique.

9. Dispositif selon les revendications 1 à 7, caractérisé en ce que comme composant B est utilisée une masse constituée par une dispersion d'acétate de polyvinyle, des alcoylphosphates chlorés et de la mélamine ou du dicyandiamide.

10. Dispositif selon les revendications 1 à 7, caractérisé en ce que comme composant A est utilisée une masse composée de silicates alcalins aqueux et d'un latex.

Fig 1

Fig 2

Fig 3

Fig 4

Fig 5

Fig 6

## Fig 7

## Fig 8

## Fig 9

## Fig 10